(19) Europäisches Patentamt / European Patent Office / Office européen des brevets

(11) **EP 2 579 255 B1**

(12) **EUROPEAN PATENT SPECIFICATION**

(45) Date of publication and mention
of the grant of the patent:
**26.11.2014 Bulletin 2014/48**

(21) Application number: **11786560.0**

(22) Date of filing: **13.05.2011**

(51) Int Cl.:
**G10L 21/0208** (2013.01)     G10L 21/0232 (2013.01)

(86) International application number:
**PCT/JP2011/061598**

(87) International publication number:
**WO 2011/148861 (01.12.2011 Gazette 2011/48)**

(54) **Audio signal processing**

Verarbeitung von Audio-Signalen

Traitement de signaux audio

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2010   JP 2010119495**

(43) Date of publication of application:
**10.04.2013   Bulletin 2013/15**

(60) Divisional application:
**14167551.2 / 2 767 978**

(73) Proprietor: **NEC Corporation
Tokyo 108-8001 (JP)**

(72) Inventors:
• **SUGIYAMA, Akihiko
  Tokyo 108-8001 (JP)**
• **MIYAHARA, Ryoji
  Tokyo 140-0002 (JP)**

(74) Representative: **Vossius & Partner
Siebertstrasse 4
81675 München (DE)**

(56) References cited:
**JP-A- 2002 314 637     JP-A- 2003 284 181
JP-A- 2005 292 812     JP-A- 2007 241 157**

EP 2 579 255 B1

**Description**

The present invention relates to a signal processing technology for suppressing noise included in a deteriorated signal and thus enhancing a desired signal.

A noise suppressing technology is known as a signal processing technology for suppressing a part or the whole of noise included in a deteriorated signal (a signal in which a desired signal and noise are mixed) and thus outputting an enhanced signal (a signal in which the desired signal is enhanced). For example, a noise suppressor is a system for suppressing noise superposed on a desired voice signal, which is used in a variety of voice terminals such as a mobile phone.

Related to this kind of technology, JP 4282227 B2 discloses a method which suppresses noise by multiplying an input signal by a suppression factor smaller than 1. JP 1996-221092 A discloses a method which suppresses noise by directly subtracting estimated noise from a deteriorated signal.

In the technologies described in JP 4282227 B2 and JP 1996-221092 A, it is necessary to estimate noise from a desired signal which is already mixed with the noise and thus deteriorated. However, there are limitations on accurate noise estimation from only a deteriorated signal. The methods described in JP 4282227 B2 and JP 1996-221092 A are effective, in general, only when noise is sufficiently small with respect to a desired signal. When the condition that noise is sufficiently small with respect to a desired signal is not satisfied, because accuracy of an estimated noise value is low, sufficient noise suppression effect is not obtained by the methods described in JP 4282227 B2 and JP 1996-221092 A, and in addition, large distortion is included in the enhanced signal.

On the other hand, JP 2006-279185 A discloses a technology which suppresses noise, when a characteristic of noise mixed into a desired signal can be known to some extent in advance, by subtracting noise information (information about a characteristic of noise) recorded in advance from the deteriorated signal. It also discloses a method which multiplies the noise information by a large factor when an input signal power obtained by analyzing the input signal is high, and by a small factor when the input signal power is low, and then subtracts the multiplication result from the deteriorated signal.

However, no technology which can suppress both of noise having unknown characteristics and noise having known characteristic is known, other than e.g. JP 2002-314637 A. For example, it has been impossible, when one performs verbal communication while manipulating a mobile phone, one performs video recording during an interview, and the like, to enhance a human speaking voice while suppressing mechanical noise and background noise.

In view of the above situation, the objective of the present invention is to provide a signal processing technology which solves the problem described above.

In order to achieve the above-described objective, a device, a method and a program recording medium in accordance with claims 1, 7 and 8, respectively, are provided.

The present invention provides a signal processing technology which can suppress both of noise having unknown characteristics and noise having known characteristics.

Hereinafter, exemplary embodiments of the present invention will be described in detail as examples, with reference to the drawings.

Fig. 1 is a block diagram showing a schematic configuration of a noise suppression unit according to a first exemplary embodiment.

Fig. 2 is a block diagram showing a schematic configuration of a noise suppression unit according to a second exemplary embodiment, in accordance with the present invention.

Fig. 3 is a block diagram showing a schematic configuration of a noise suppression unit according to a third exemplary embodiment, in accordance with the present invention.

Fig. 4 is a block diagram showing a schematic configuration of a noise suppression unit according to a fourth exemplary embodiment, in accordance with the present invention.

Fig. 5 is a block diagram showing a schematic configuration of a noise suppression unit according to a fifth exemplary embodiment.

Fig. 6 is a block diagram showing a schematic configuration of a noise suppression unit according to a sixth exemplary embodiment.

Fig. 7 is a block diagram showing a schematic configuration of a noise suppression unit according to a seventh exemplary embodiment.

Fig. 8 is a block diagram showing a schematic configuration of a noise suppression unit according to an eighth exemplary embodiment.

Fig. 9 is a block diagram showing a schematic configuration of an information processing device as a ninth exemplary embodiment, in accordance with the present invention.

Fig. 10 is a block diagram showing a configuration of a transformation unit included in the information processing device as the ninth exemplary embodiment.

Fig. 11 is a block diagram showing a configuration of an inverse transformation unit included in the information processing device as the ninth exemplary embodiment.

Fig. 12 is a block diagram showing a schematic configuration of an information processing device as a tenth exemplary embodiment.

Fig. 13 is a block diagram showing a schematic configuration of an information processing device as an eleventh exemplary embodiment.

Fig. 14 is a block diagram showing a schematic configuration of an information processing device as a twelfth exemplary embodiment.

Fig. 15 is a schematic configuration diagram of a computer for executing a signal processing program, as an other exemplary embodiment.

Fig. 16 is a block diagram showing a schematic configuration of an information processing device.

Here, constituents described in the following exemplary embodiments (not all of them in accordance with the present invention) are shown only as examples.

(first exemplary embodiment)

As a first exemplary embodiment of an information processing device, description will be given of a device which suppresses a part or whole of noise included in a deteriorated signal (a signal in which a desired signal is mixed with noise), and thus outputs an enhanced signal (a signal in which the desired signal is enhanced).

In the present exemplary embodiment, assumed are the cases such as those where one takes a picture or manipulates a machine while making verbal communication on a mobile phone, where one manipulates a machine while making audio recording with an IC recorder, and where one manipulates a machine or a machine operates while making video recording of an interview. According to the present exemplary embodiment, it is possible to achieve, in a well-balanced manner, both of suppression of noise generated around a device (background noise existing in surroundings of a user of the device or a speaker) and suppression of noise generated in the devise itself (known noise such as auto-focusing noise, zooming noise and shutter noise).

As such information processing devices, mentioned are digital still cameras, digital camcorders, laptop PCs, mobile phones, IC recorders and TV conference systems, for example. However, the present invention is not limited to them, but can be applied to any devices for which noise elimination is demanded.

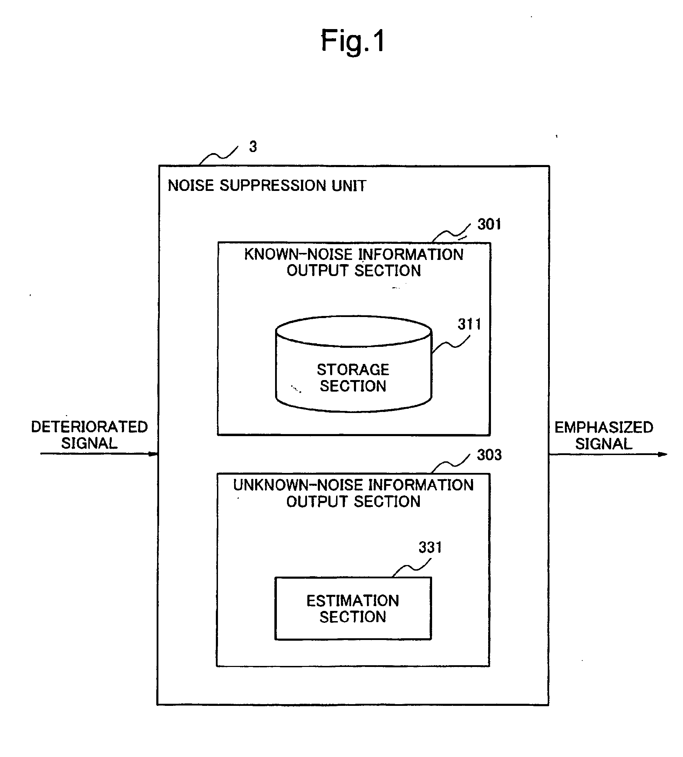

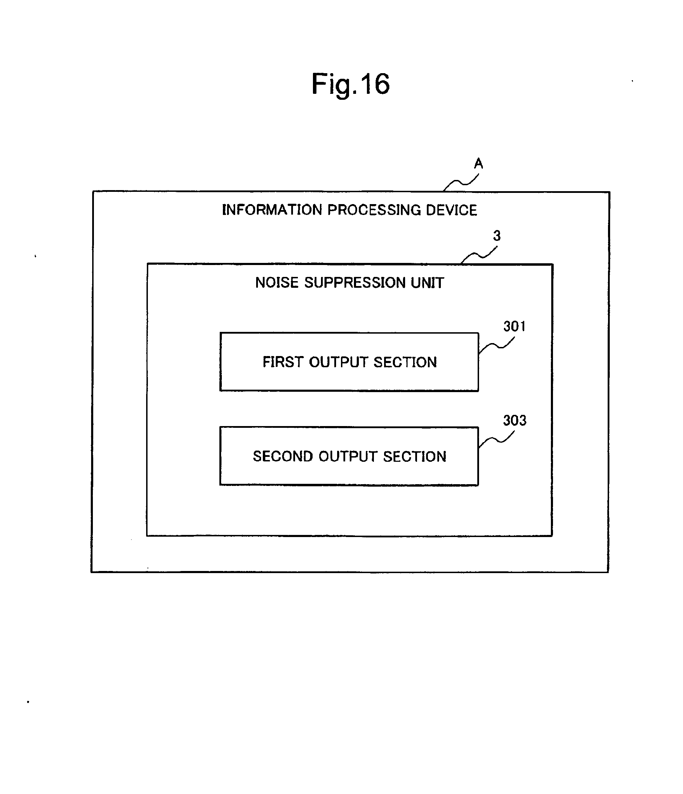

Fig. 1 is a block diagram showing a configuration of a noise suppression unit 3 included in an information processing device. As shown in the figure, the noise suppression unit 3 includes a known-noise information output unit 301 and an unknown-noise information output unit 303. It performs noise suppression using known noise information outputted from the known-noise information output unit 301 and unknown noise information outputted from the unknown-noise information output unit 303. Fig. 16 is another block diagram showing a configuration of an information processing device A. The information processing device A comprises a noise suppression unit 3. The noise suppression unit 3 comprises a first output section 301 (known-noise information output section 301) that outputs, for the purpose of suppressing known noise having known characteristics, known-noise information stored in advance, and a second output section 303 (unknown-noise information output section 303) that outputs, for the purpose of suppressing unknown noise having unknown characteristics, unknown-noise information by estimating the unknown noise. The following description will be given with reference to Fig. 1.

The known-noise information output section 301 outputs known-noise information using noise information stored in advance in a storage section 311, in order to suppress known noise having known characteristics. The storage section 311 includes a storage device such as a semiconductor memory and stores information (noise information) about a characteristic of known noise as a suppression target. The noise stored as a suppression target is, for example, a shutter noise, motor driving noise, zooming noise, focusing noise of an auto-focusing mechanism (clicking sound) or the like. On the other hand, in order to suppress unknown noise having unknown characteristics, the unknown-noise information output section 303 includes an estimation section 331 for estimating unknown noise included in a deteriorated signal.

With the above configuration, the information processing device of the present exemplary embodiment can suppress both of noise having unknown characteristics and noise having known characteristics.

(second exemplary embodiment)

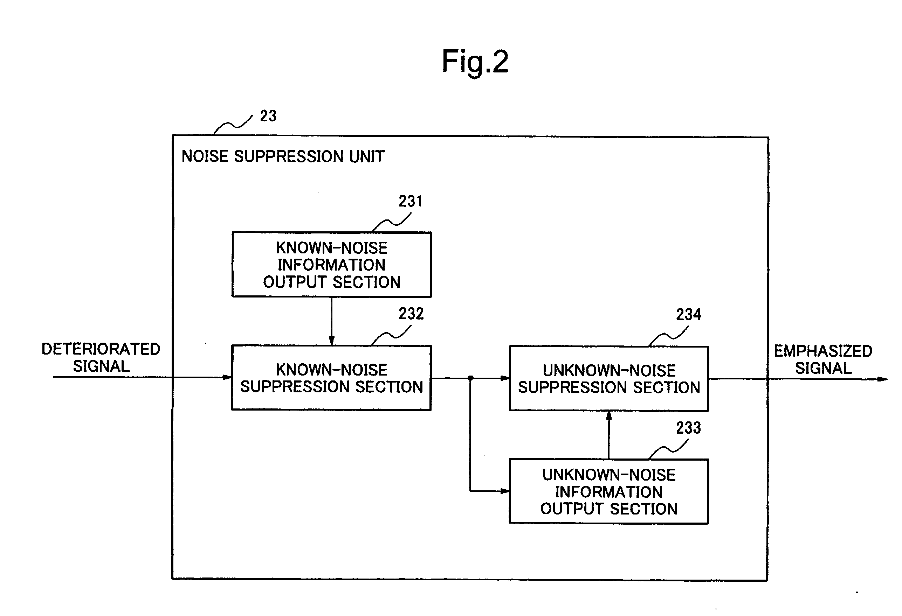

Fig. 2 is a block diagram showing a configuration of a noise suppression unit 23 included in an information processing device as a second exemplary embodiment, which is in accordance with the present invention. Similarly to the first exemplary embodiment, the noise suppression unit 23 includes a known-noise information output section 231 and an unknown-noise information output section 233. It performs noise suppression using known noise information outputted from the known-noise information output section 231 and unknown noise information outputted from the unknown-noise information output section 233. Although they are not illustrated in the figure, the known-noise information output section 231 includes a storage section for storing noise information in advance, and the unknown-noise information output section 233 includes an estimation section for estimating unknown noise included in a deteriorated signal.

Here, the noise suppression unit 23 of the present exemplary embodiment performs further noise suppression, using unknown noise information outputted from the unknown-noise information output section 233, on a signal having undergone noise suppression using known noise information outputted from a known-noise information output section 231. That is, known noise information outputted from the known-noise information output section 231 is supplied to the known-noise suppression section 232, where it is used for suppressing known noise included in an inputted deteriorated signal. Further, a signal in which the known noise has been already suppressed is supplied to the unknown-noise information output section 233, where it is used for estimation of unknown noise by the unknown-noise information output section 233. Then, unknown-noise information outputted as a result of the estimation is outputted to an unknown-noise suppression section 234, where processing for suppressing the estimated unknown noise is performed on the signal in which the known noise has been already suppressed, and the resulting signal is outputted as an enhanced signal.

With the above configuration, the information processing device of the present exemplary embodiment achieves suppression of both noise having an unknown characteristic and that having a known characteristic.

(third exemplary embodiment)

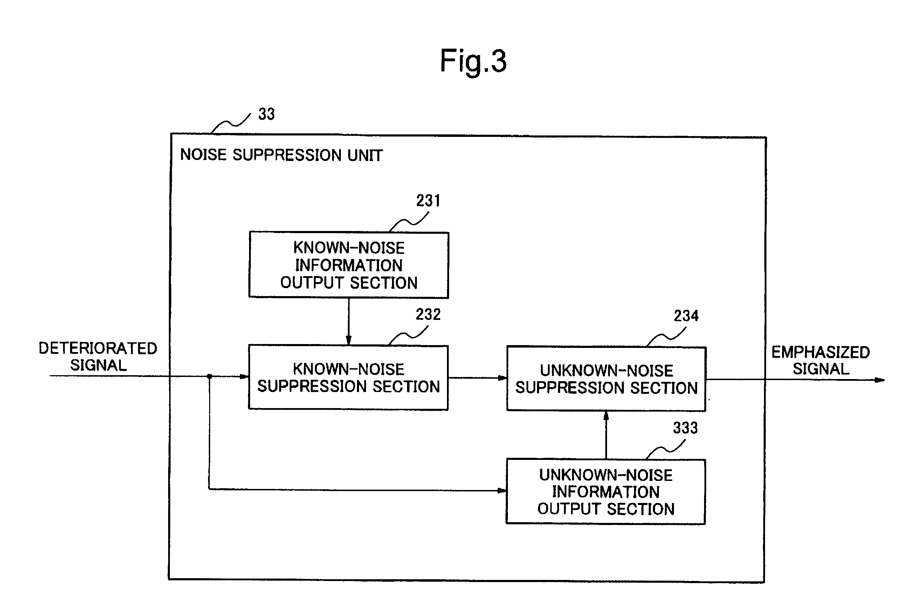

Fig. 3 is a block diagram showing a configuration of a noise suppression unit 33 included in an information processing device as a third exemplary embodiment, which is in accordance with the present invention. The configuration and operation of the noise suppression unit 33 according to the present exemplary embodiment are almost the same as that of the noise suppression unit 23 of the second exemplary embodiment. However, there is a difference in that an inputted deteriorated signal is supplied to an unknown-noise information output section 333.

In the present exemplary embodiment, the unknown-noise information output section 333 estimates unknown noise using an inputted deteriorated signal. Then, unknown-noise information outputted as a result of the estimation is outputted to the unknown-noise suppression section 234, where processing for suppressing the estimated unknown noise is performed on the signal in which known noise has been already suppressed, and the resulting signal is outputted as an enhanced signal.

With the above configuration, highly accurate estimation of unknown noise becomes possible even when accuracy of noise suppression by the known-noise information output section 231 and the known-noise suppression section 232 is low.

(fourth exemplary embodiment)

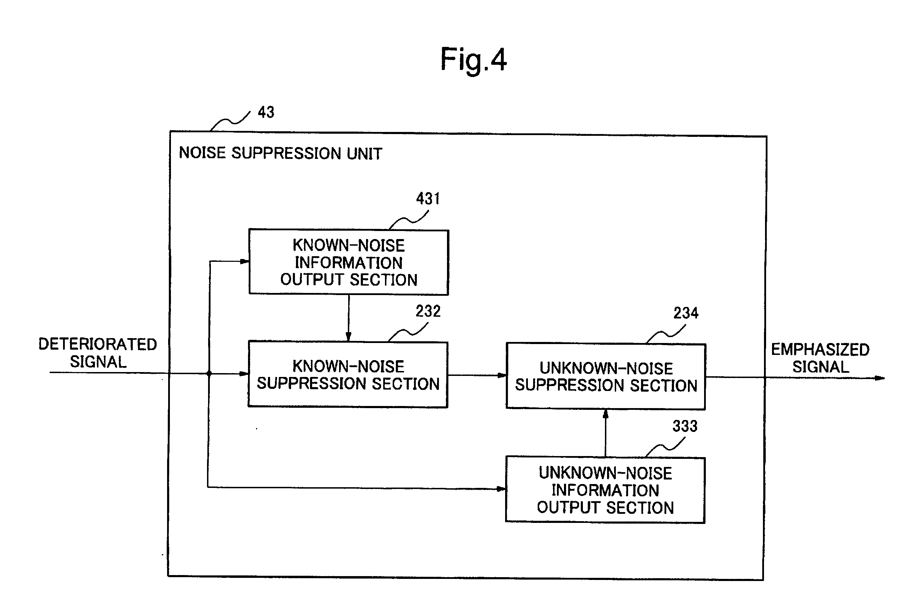

Fig. 4 is a block diagram showing a configuration of a noise suppression unit 43 included in an information processing device as a fourth exemplary embodiment, which is in accordance with the present invention. The configuration and operation of the noise suppression unit 43 according to the present exemplary embodiment are almost the same as that of the noise suppression unit 33 of the third exemplary embodiment. However, there is a difference in that an inputted deteriorated signal is supplied also to a known-noise information output section 431.

In the present exemplary embodiment, the known-noise information output section 431 generates known-noise information from noise information stored in a storage section, using an inputted deteriorated signal. For example, the known-noise information output section 431 analyzes an inputted deteriorated signal and, by a mixing method according to the analysis result, mixes pieces of noise information stored in advance together, and thereby generates and outputs mixed noise information (pseudo noise information) as known-noise information. At least one of a plurality of pieces of noise information subjected to the mixing is one stored in the storage section in advance.

A more specific example is such that a plurality of pieces of noise information are stored in the storage section in advance, and the known-noise information output section 431 mixes them into a combination. Targets of the mixing are, for example, with respect to known noise, a combination of maximum and average noise information, a combination of maximum, average and minimum noise information, a combination of peak component noise information and others, a combination of impact component noise information and others, and the like.

Here definitions of the average, maximum, minimum, peak component and impact component noise information are as follows, respectively.

Average noise information: one obtained, with respect to whole (a plurality of frames) of known noise, by averaging amplitudes (or powers) of the same frequency component in a plurality of spectra derived by Fourier transform; which is what is called an average spectrum obtained by averaging in terms of time.

Maximum noise information: a maximum value of amplitude (or power) for each frequency component in a plurality of spectra derived by Fourier transform of the whole (a plurality of frames) of known noise; which is a so-called maximum spectrum.

Minimum noise information: a minimum value of amplitude (or power) for each frequency component in a plurality of spectra derived by Fourier transform of the whole (a plurality of frames) of known noise; which is a so-called minimum spectrum.

Peak component noise information: a frequency component having a distinctly large amplitude value compared to that of neighboring components, when the amplitudes are compared with each other in sequence of frequency in spectra derived by Fourier transform of the whole (a plurality of frames) of known noise.

Impact component noise information: an average of a plurality of spectra derived by Fourier transform of the whole of impact sounds; which is a so-called average spectrum of impact sounds. Although an impact sound is itself one having a large amplitude value in an extremely short period of time when change with time of its audio signal before Fourier transform is observed, its spectrum after Fourier transform is characterized by that the amplitude is almost constant over a certain frequency range.

As described above, by mixing pieces of noise information stored in advance by the use of a mixing method according to a result of analysis on an inputted deteriorated signal, and thus generating mixed noise information (pseudo noise information) as known-noise information, it is possible to realize noise suppression capable of dealing with a heavily changing signal characteristic.

(fifth exemplary embodiment)

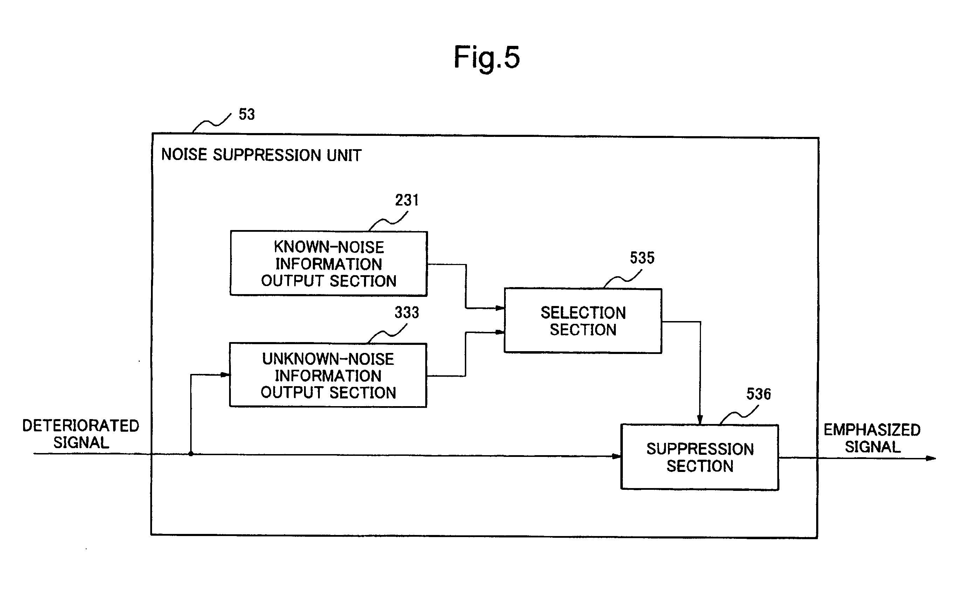

Fig. 5 is a block diagram showing a configuration of a noise suppression unit 53 included in an information processing device as a fifth exemplary embodiment. The noise suppression unit 53 according to the present exemplary embodiment is different from the second to fourth exemplary embodiments described above in that noise suppression is performed using selectively known-noise information outputted from a known-noise information output section 231 and unknown-noise information outputted from an unknown-noise information output section 333. Because the configuration and operation of the known-noise information output section 231 and that of the unknown-noise information output section 333 are respectively the same as that in the second exemplary embodiment and that in the third exemplary embodiment, the respective same signs are given to them.

In the noise suppression unit 53, the selection section 535 calculates, for example, a gain g1 (0<g1<1) with respect to known-noise information and a gain g2 (0<g2<1) with respect to unknown-noise information, selects either the smaller or the larger one between them and supplies it to a suppression section 536. The suppression section 536 performs noise suppression by multiplying a deteriorated signal by the gain supplied from the selection section 535. Here, the noise suppression by the noise suppression unit 53 is performed for each frequency component of the deteriorated signal. Specifically, for each frequency, the noise suppression unit 53 evaluates which is more serious between known noise and unknown noise, and performs noise suppression in a way adapted to the more serious one.

Here, the configuration may be such that a deteriorated signal is inputted to the selection section 535, and the selection section 535 determines, by analyzing the deteriorated signal, which of known-noise information and unknown-noise information to use for the suppression. In this case, the suppression section 536 performs noise suppression by subtracting the known-noise or unknown-noise information supplied from the selection section 535 from the deteriorated signal.

According to the present exemplary embodiment, noise suppression can be realized more efficiently. For example, if the selection section 535 selects a minimum gain value, more serious noise can be suppressed effectively. That is, according to the present exemplary embodiment, it is possible, in a situation where known noise is overall larger than unknown noise, to preferentially suppress known noise at a frequency where known noise is larger, and unknown noise at a frequency where known noise is smaller. On the other hand, if the selection section 535 selects a maximum gain value, occurrence of distortion due to noise suppression can be prevented effectively, and high sound quality can thus be realized. Further, when a threshold gain value Gth for no occurrence of distortion is known, the noise suppression unit 53 may perform the suppression using a smaller one of the gains g1 and g2 if both of the gains are larger than the threshold value Gth, and using the threshold value Gth in place of the smaller one if either of the gains is smaller than the threshold value Gth.

(sixth exemplary embodiment)

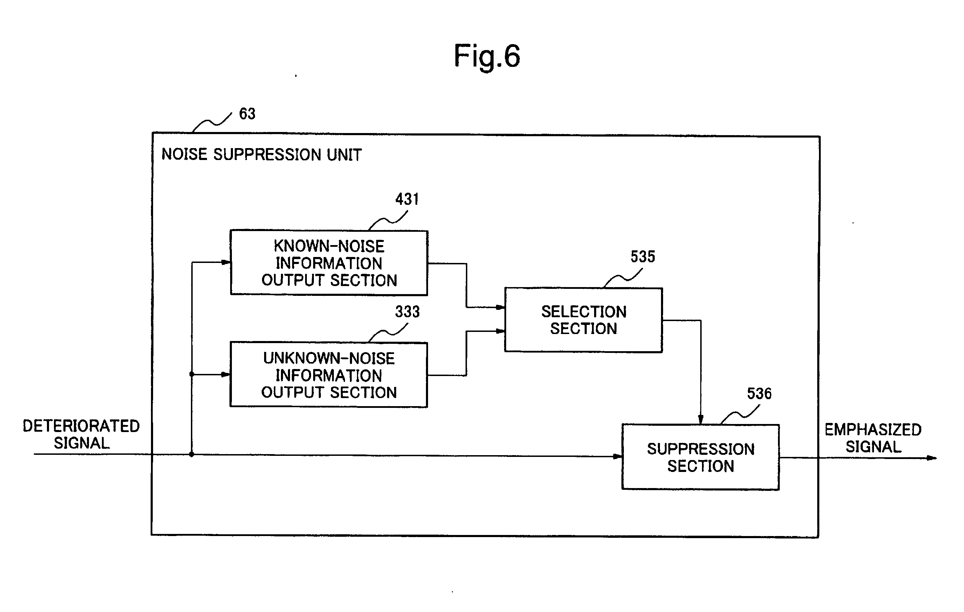

Fig. 6 is a block diagram showing a configuration of a noise suppression unit 63 included in an information processing device as a sixth exemplary embodiment. The noise suppression unit 63 according to the present exemplary embodiment is different from that in the fifth exemplary embodiment in that a known-noise information output section 431 generates known-noise information according to an analysis result on a deteriorated signal. For that purpose, a deteriorated signal is supplied to the known-noise information output section 431. The process of analyzing a deteriorated signal and then generating known-noise information according to the analysis result is the same as that described in the fourth exemplary embodiment using Fig. 4, and therefore the description will be omitted here. Further, because the other configurations and operations are the same as that in the fifth exemplary embodiment, the respective same signs are given to the identical configurations and their descriptions will be omitted here.

As in the present exemplary embodiment, by generating known-noise information according to an analysis result on an inputted deteriorated signal, noise suppression capable of dealing with a heavily changing signal characteristic can be achieved, in addition to the effect of the fifth exemplary embodiment.

(seventh exemplary embodiment)

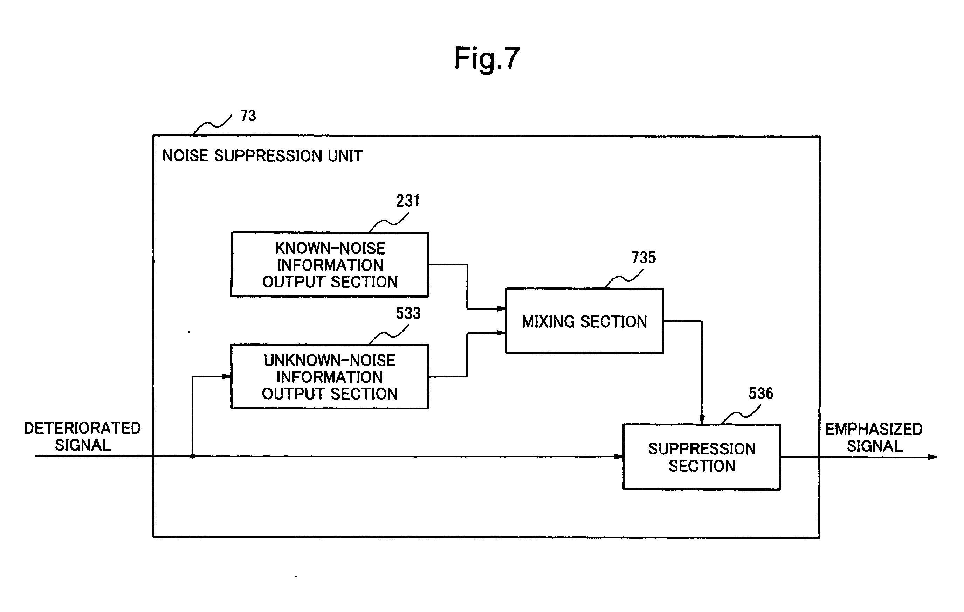

Fig. 7 is a block diagram showing a configuration of a noise suppression unit 73 included in an information processing device as a seventh exemplary embodiment. The noise suppression unit 73 according to the present exemplary embodiment is different from that in the fifth exemplary embodiment described above in that noise suppression is performed mixing together known-noise information outputted from a known-noise information output section 231 and unknown-noise information outputted from an unknown-noise information output section 333. Because the other configurations are the same as that in the fifth exemplary embodiment, the respective same signs are given to the identical configurations and their descriptions will be omitted here.

In the noise suppression unit 73, a mixing section 735 calculates, for example, a gain g1 ($0 < g1 < 1$) with respect to known-noise information and a gain g2 ($0 < g2 < 1$) with respect to unknown-noise information, and supplies a value obtained by mixing them (a medium value, for example) to a suppression section 536. The suppression section 536 performs noise suppression by multiplying a deteriorated signal by the gain supplied from the mixing part 735. Here, the noise suppression by the noise suppression unit 73 is performed for each frequency component of the deteriorated signal. That is, known noise and unknown noise are suppressed for each frequency.

Here, the configuration may be such that a deteriorated signal is inputted to the mixing section 735, and the mixing section 735 analyzes the deteriorated signal and mixes known-noise information and unknown-noise information according to the analysis result, and the mixed information is used for the suppression. That is, the mixing section 735 may mix known-noise information and unknown-noise information by weighting them according to the analysis result on the inputted deteriorated signal.

According to the present exemplary embodiment, it is possible to obtain more accurately a gain of suppression or a component to subtract for suppression, and thus to realize noise suppression effectively. As a result, it becomes possible to realize noise suppression and prevention of distortion occurrence due to it in a well-balanced manner.

(eighth exemplary embodiment)

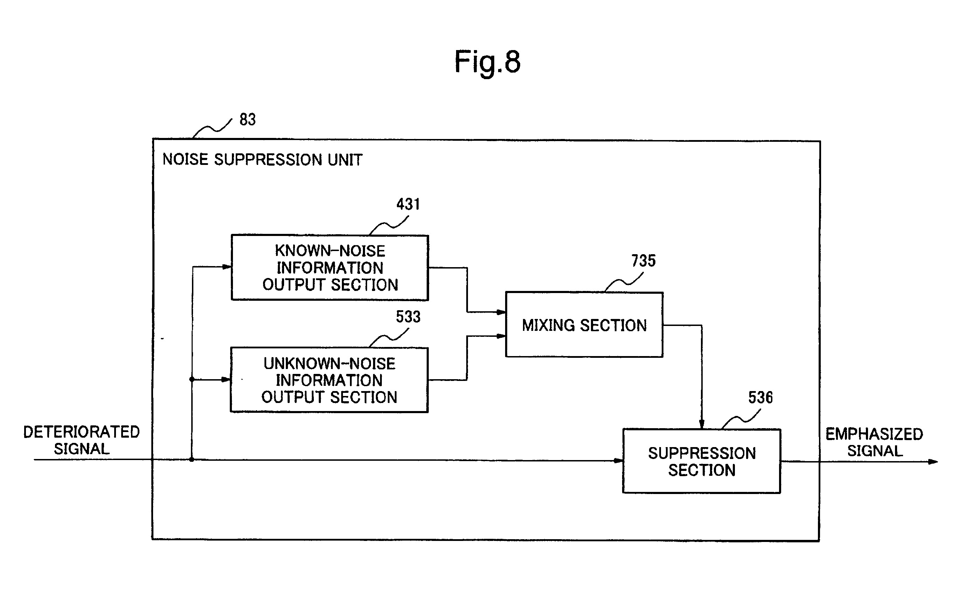

Fig. 8 is a block diagram showing a configuration of a noise suppression unit 83 included in an information processing device as an eighth exemplary embodiment. The noise suppression unit 83 according to the present exemplary embodiment is different from that in the seventh exemplary embodiment in that a known-noise information output section 431 generates known-noise information according to an analysis result on a deteriorated signal. For that purpose, a deteriorated signal is supplied to the known-noise information output section 431. The process of analyzing a deteriorated signal and then generating known-noise information according to the analysis result is the same as that described in the fourth exemplary embodiment using Fig. 4, and therefore the description will be omitted here. Further, because the other configurations and operations are the same as that in the seventh exemplary embodiment, the respective same signs are given to the identical configurations and their descriptions will be omitted here.

As in the present exemplary embodiment, by generating known-noise information according to an analysis result on an inputted deteriorated signal, noise suppression capable of dealing with a heavily changing signal characteristic can be achieved, in addition to the effect of the seventh exemplary embodiment.

(ninth exemplary embodiment)

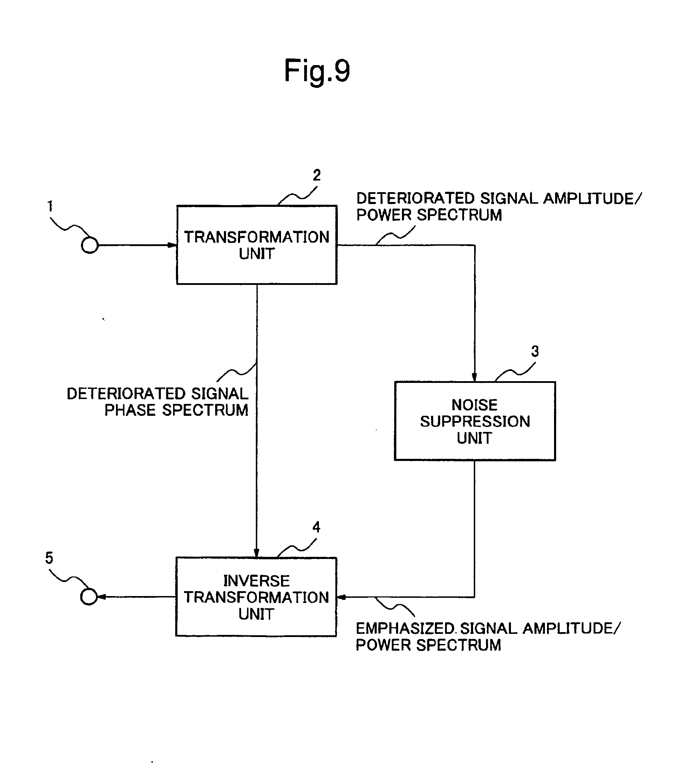

In the present exemplary embodiment, using Fig. 9, description will be given of an example of a peripheral configuration of the noise suppression units 3, 23, 33, 43, 53, 63, 73 and 83 described respectively in the first to eighth exemplary embodiments. Fig. 9 and the following description will be given with respect to the noise suppression unit 3 taken as a representative.

As shown in Fig. 9, an input port 1, a transformation unit 2, an inverse transformation unit 4 and an output port 5 are provided in the periphery of the noise suppression unit 3.

A deteriorated signal is supplied to the input port 1 as a series of sample values. The deteriorated signal supplied to the input port 1 undergoes transformation such as Fourier transform at the transformation unit 2, and thus is divided into a plurality of frequency components. An amplitude spectrum of the plurality of frequency components is supplied to the noise suppression unit 3, and a phase spectrum is transmitted to the inverse transformation unit 4. Although an amplitude spectrum is supplied to the noise suppression unit 3 here, the present invention is not limited to it, but a power spectrum corresponding to the square of the amplitude spectrum may be supplied to the noise suppression unit 3.

The noise suppression unit 3 suppresses noise at each frequency of the deteriorated-signal amplitude spectrum supplied from the transformation unit 2, and transmits to the inverse transformation unit 4 an enhanced-signal amplitude spectrum as a result of the noise suppression. The inverse transformation unit 4 performs inverse transformation combining the enhanced-signal amplitude spectrum supplied from the noise suppression unit 3 and the phase spectrum of the deteriorated signal supplied from the transformation unit 2, and supplies the result as an enhanced signal sample to the output port 5

[configuration of the transformation unit]

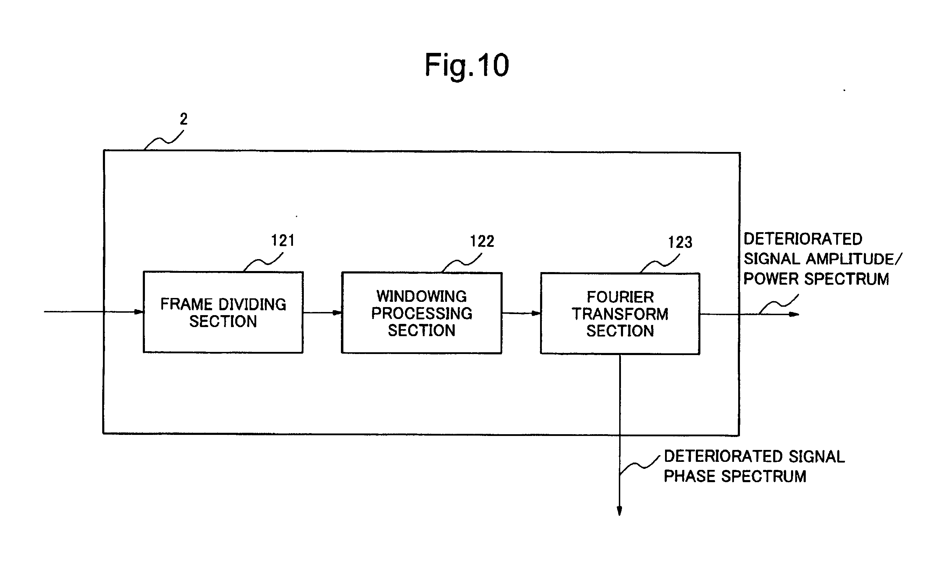

Fig. 10 is a block diagram showing a configuration of the transformation unit 2. As shown in Fig. 10, the transformation unit 2 includes a frame dividing section 121, a windowing section 122 and a Fourier transform section 123. Deteriorated signal samples are supplied to the frame dividing section 121, where they are divided into frames each including K/2 samples. Here, K is assumed to be an even number. The deteriorated signal samples divided into frames are supplied to the windowing section 122, where they are multiplied by a window function $w(t)$. A signal obtained by windowing an input signal $yn(t)$ ($t=0, 1, ..., K/2-1$) in the n-th frame with $w(t)$ is given by the following equation (1).

$$\bar{y}_n(t) = w(t)y_n(t) \qquad \cdots (1)$$

Windowing with an overlap of a part of successive two frames also is widely used. Assuming an overlap length to be 50% of the frame length, for $t=0, 1, ..., K/2-1$, the left-hand sides of the following equation (2) become the output of the windowing section 122.

$$\left.\begin{array}{l} \bar{y}_n(t) = w(t)y_{n-1}(t + K/2) \\ \bar{y}_n(t + K/2) = w(t + K/2)y_n(t) \end{array}\right\} \qquad \cdots (2)$$

A bilaterally-symmetric window function is used for a real numbered signal. A window function is designed in a manner where, when a suppression factor is set to be 1 in the MMSE STSA (Minimum Mean-Square Error Short-Time Spectral Amplitude Estimator) method, or when zero is subtracted in the SS (Spectrum Subtraction) method, an input signal and an output signal coincide with each other except for a calculational error. This means that $w(t) + w(t+K/2) = 1$ holds.

Hereinafter, description will be continued taking as an example the case where windowing is performed with 50% overlap between successive two frames. As $w(t)$, for example, Hanning window expressed by the following equation (3) can be used.

$$w(t) = \begin{cases} 0.5 + 0.5\cos\left(\dfrac{\pi(t - K/2)}{K/2}\right), & 0 \le t < K \\ 0, & otherwise \end{cases} \quad \cdots (3)$$

Besides it, also known are a variety of window functions such as Hamming, Kaiser, and Blackman windows. The windowed output is supplied to the Fourier transform section 123, where it is transformed into a deteriorated signal spectrum Yn(k). The deteriorated signal spectrum Yn(k) is separated into an amplitude and a phase spectra, and the deteriorated-signal phase spectrum argYn(k) is supplied to the inverse transformation unit 4, and the deteriorated-signal amplitude spectrum |Yn(k)| to the noise suppression unit 3. As already described, a power spectrum can be used instead of an amplitude spectrum.

[configuration of the inverse transformation unit]

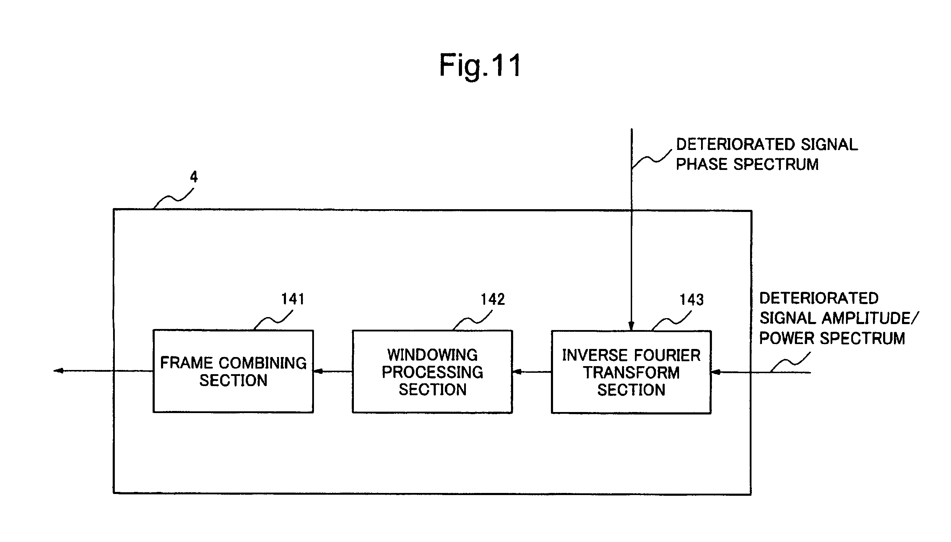

Fig. 11 is a block diagram showing a configuration of the inverse transformation unit 4. As shown in Fig. 11, the inverse transformation unit 4 includes an inverse Fourier transform section 143, a windowing section 142 and a frame combining section 141. The inverse Fourier transform section 143 calculates an enhanced signal (left-hand side of the following equation (4)) by multiplying together the enhanced-signal amplitude spectrum supplied from the noise suppression unit 3 and the deteriorated-signal phase spectrum argYn(k) supplied from the transformation unit 2.

$$\overline{X}_n(k) = \left|\overline{X}_n(k)\right| \cdot \arg Y_n(k) \qquad \cdots (4)$$

The inverse Fourier transform section 143 performs inverse Fourier transform on the obtained enhanced signal. The enhanced signal having undergone inverse Fourier transform is supplied to the windowing section 142 in the form of a time-domain series of sample values xn(t) (t=0, 1, ..., K-1) where each frame includes K samples, and there, it is multiplied by a window function w(t). A signal obtained by windowing an input signal xn(t) (t=0, 1, ..., K/2-1) in the n-th frame with w(t) is given by the left-hand side of the following equation (5).

$$\overline{x}_n(t) = w(t)x_n(t) \qquad \cdots (5)$$

Windowing with overlap of a part of successive two frames also is widely used. Assuming an overlap length to be 50% of the frame length, for t=0, 1, ..., K/2-1, the left-hand sides of the following equation (6) become the output of the windowing section 142, which is transmitted to the frame combining section 141.

$$\left.\begin{array}{l} \overline{x}_n(t) = w(t)x_{n-1}(t + K/2) \\ \overline{x}_n(t + K/2) = w(t + K/2)x_n(t) \end{array}\right\} \qquad \cdots (6)$$

The frame combining section 141 takes K/2 samples from each of successive two frames in the output from the windowing section 142, superposes them together, and calculates by the following equation (7) output signals for t=0, 1, ..., K-1 (the left-hand side of the equation (7)). The obtained output signals are transmitted from the frame combining section 141 to the output port 5.

$$\hat{x}_n(t) = \bar{x}_{n-1}(t + K/2) + \bar{x}_n(t) \qquad \cdots (7)$$

Although the above description has been given assuming that the transform used at the transformation section 2 and the inverse transformation section 4 is Fourier transform in Figs. 10 and 11, the transformation section 2 and the inverse transformation section 4 may use other transforms, in place of Fourier transform, such as a cosine, a modified-cosine, Hadamard, Haar and a wavelet transforms. For example, because a cosine and a modified-cosine transforms obtain only amplitudes as transformation results, the path from the transformation unit 2 to the inverse transformation unit 4 in Fig. 9 becomes unnecessary. Further, noise information recorded in a storage section 311 becomes only on amplitudes (or powers), which contributes to reduction in the storage capacity and that in calculation amount in the noise suppression. Haar transform needs no multiplication and thus enables reduction in the area of an LSI designed to perform the processing. Because a wavelet transform allows for changing time resolution depending on the frequency, improvement in the noise suppression effect can be expected.

Further, also possible is that the transformation unit 2 integrates a plurality of frequency components and then the noise suppression unit 3 performs actual suppression. In that case, by increasing the number of integrated frequency components with increasing frequency from a low frequency region where the resolution of the human auditory system is high toward a high frequency region where the resolution is low, the transformation unit 2 can achieve high sound quality. In this way, by performing noise suppression after integrating a plurality of frequency components, the number of frequency components to be subjected to noise suppression becomes smaller, and thus the whole calculation amount is reduced.

[processing at the noise suppression unit]

In the noise suppression unit 3, a variety of suppression can be performed. As representative suppression methods, there are the SS method and the MMSE STSA method. The SS method subtracts noise information from the deteriorated-signal amplitude spectrum supplied from the transformation unit 2. The MMSE STSA method calculates a suppression factor with respect to each of a plurality of frequency components, using noise information and the deteriorated-signal amplitude spectrum supplied from the transformation unit 2, and multiplies the deteriorated-signal amplitude spectrum by the calculated suppression factors. The suppression factors are determined in a manner to minimize the mean-square power of an enhanced signal.

In noise suppression, the noise suppression unit 3 may adopt flooring so as to avoid excessive suppression. The flooring is a method for avoiding suppression exceeding a maximum suppression amount, and a flooring parameter determines the maximum suppression amount. The SS method imposes a restriction so that a result of subtracting corrected noise information from the deteriorated-signal amplitude spectrum does not become smaller than a flooring parameter. Specifically, when the subtraction result is smaller than the flooring parameter, the SS method substitutes the subtraction result with the flooring parameter. The MMSE STSA method substitutes a suppression factor with a flooring parameter when the suppression factor calculated from corrected noise information and the deteriorated-signal amplitude spectrum is smaller than the flooring parameter. Details of the flooring are disclosed in a document: M. Berouti, R. Schwartz and J. Makhoul, "Enhancement of speech corrupted by acoustic noise," Proceedings of ICASSP '79, pp.208-211, Apr. 1979. By employing a flooring parameter, the noise suppression unit 3 suffers no occurrence of excessive suppression and can prevent increase in distortion of an enhanced signal.

The noise suppression unit 3 may also set the number of frequency components of noise information to be smaller than that of a deteriorated-signal spectrum. In that case, a plurality of pieces of noise information are commonly used for a plurality of frequency components. Because frequency resolution of a deteriorated-signal spectrum is higher in this case than in the case where a plurality of frequency components are integrated with respect to both a deteriorated-signal spectrum and noise information, the noise suppression unit 3 can achieve high sound quality with a smaller calculation amount than when no integration of frequency components is performed. Details of the suppression using noise information with a smaller number of frequency components than that of a deteriorated-signal spectrum are disclosed in Japanese Patent Application Laid-Open No. 2008-203879.

(tenth exemplary embodiment)

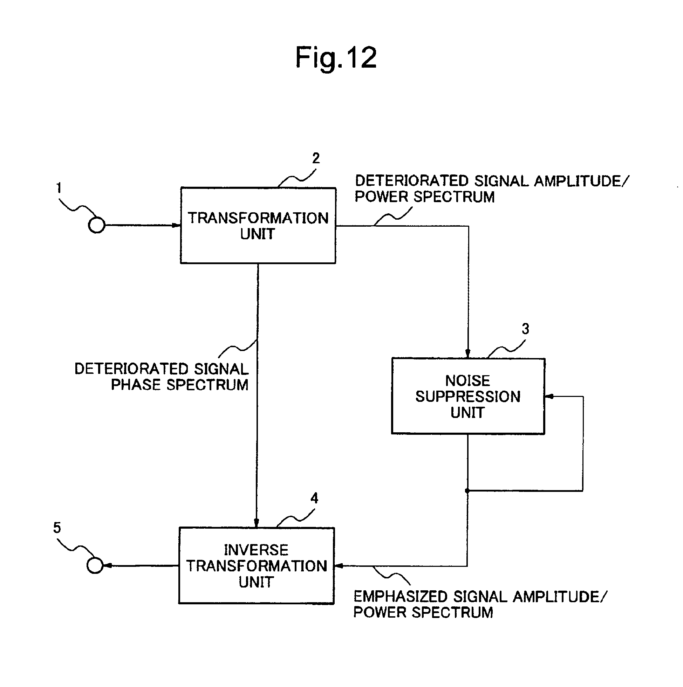

A tenth exemplary embodiment will be described below using Fig. 12. Comparing it with the ninth exemplary embodiment, there is a difference in that a noise suppression result is fed back to a noise suppression unit 3 according to the present exemplary embodiment. Because the other configurations are the same as that in the ninth exemplary embodiment, the respective same signs are given here to the identical configurations, and their descriptions are omitted.

In the present exemplary embodiment, by multiplying noise information (for example, a gain) on noise to suppress by a scaling factor based on an enhanced-signal amplitude spectrum as a noise suppression result, the noise suppression unit 3 corrects the noise information.

When updating the scaling factor using a fed-back noise suppression result, the noise suppression unit 3 performs updating in a manner such that the larger the noise suppression result with no desired signal in the deteriorated signal is (the larger the residual noise is), the larger the noise information after the correction becomes. It is because a large noise suppression result with no desired signal indicates that the suppression is insufficient, and it is desirable to increase noise information after the correction by changing the scaling factor. If noise information after the correction is large, a value to be subtracted becomes large in the SS method, and accordingly the noise suppression result becomes small. In multiplication type suppression such as the MMSE STSA method, an estimated value of the signal to noise ratio used for calculating a suppression factor becomes low, and accordingly a small suppression factor is obtained. These bring about stronger noise suppression. For updating a scaling factor, a plurality of methods can be considered. As examples, a recalculation method and a successive updating method will be described below.

As a noise suppression result, a state of complete noise suppression is ideal. For this purpose, the noise suppression unit 3 may recalculate or successively update the scaling factor in a manner, for example, to achieve a state of complete noise suppression when the amplitude or power of a deteriorated signal is small. It is because when the amplitude or power of a deteriorated signal is small, it is more likely that the power of a signal other than the noise to be suppressed is also small. The noise suppression unit 3 can evaluate if the amplitude or power of a deteriorated signal is small by detecting that the amplitude or power of the deteriorated signal is smaller than a threshold value.

Also, the noise suppression unit 3 can evaluate if the amplitude or power of a deteriorated signal is small by detecting that a difference between the amplitude or power of the deteriorated signal and that of noise information stored in the storage section 311 is smaller than a threshold value. That is, the noise suppression unit 3 uses a fact that, when the amplitude or power of a deteriorated signal is comparable to that of noise information, occupancy of the noise information in the deteriorated signal is high (the signal-to-noise ratio is low). In particular, by using information at a plurality of frequency points in an integrated manner, it becomes possible for the noise suppression unit 3 to compare outlines of spectra and thus to increase detection accuracy.

A scaling factor in SS method is recalculated in a manner such that, for each frequency, corrected noise information becomes equal to a deteriorated-signal spectrum with no desired signal in the deteriorated signal. In other words, the noise suppression unit 3 calculates the scaling factor $\alpha_n$ such that a deteriorated-signal spectrum $|Y_n(k)|$ supplied from the transformation unit 2 when there is only noise coincides with a product of the scaling factor $\alpha_n$ and noise information $v(k)$. Here, n is a frame index, and k is a frequency index. Accordingly, the scaling factor $\alpha_n(k)$ is calculated by the following equation (8).

$$\alpha_n(k) = |Y_n(k)| / v_n(k) \quad ... (8)$$

On the other hand, in successive updating of a scaling factor in SS method, a scaling factor is incrementally updated in a manner to make an enhanced-signal amplitude spectrum at a timing point with no desired signal inputted become closer to zero. When the noise suppression unit 3 uses the least mean square (LMS) algorithm for the successive updating, it calculates $\alpha_{n+1}(k)$ by the following equation (9) using an error $e_n(k)$ for the nth frame and a frequency index k.

$$\alpha_{n+1}(k) = \alpha_n(k) + \mu e_n(k) / v_n(k) \quad ... (9)$$

Here, $\mu$ is a small constant referred to as a step size.

When the noise suppression unit 3 immediately adopts the calculated scaling factor $\alpha_n(k)$, it uses the following equation (10) in place of the equation (9).

$$\alpha_n(k) = \alpha_{n-1}(k) + \mu e_n(k) / v_n(k) \quad ... (10)$$

That is, the noise suppression unit 3 calculates a current scaling factor $\alpha_n(k)$ using a current error, and adopts it immediately. By immediately updating the scaling factor, the noise suppression unit 3 can realize highly accurate noise suppression in real time.

When the noise suppression unit 3 uses the normalized least mean squares (NLMS) algorithm, it calculates a

scaling factor $\alpha_{n+1}(k)$ by the following equation (11) using an error $e_n(k)$ described above.

$$\alpha_{n+1}(k) = \alpha_n(k) + \mu\, e_n(k)\, v_n(k) / \sigma_n(k)^2 \quad \dots (11)$$

The $\sigma_n(k)^2$ is an average power of the noise information $v_n(k)$, and can be calculated using an average based on an FIR filter (a moving average using a sliding window), or that based on an IIR filter (leaky integration) or the like.
Also, the noise suppression unit 3 may calculate the scaling factor $\alpha_{n+1}(k)$ by the following equation (12) using a perturbation method.

$$\alpha_{n+1}(k) = \alpha_n(k) + \mu\, e_n(k) \quad \dots (12)$$

Further, the noise suppression unit 3 may calculate the scaling factor $\alpha_{n+1}(k)$ by the following equation (13) using a sign function $\text{sgn}\{e_n(k)\}$ expressing only the sign of an error.

$$\alpha_{n+1}(k) = \alpha_n(k) + \mu \cdot \text{sgn}\{e_n(k)\} \quad \dots (13)$$

Similarly, the noise suppression unit 3 may use the least square (LS) algorithm and other adaptive algorithms. Further, the noise suppression unit 3 can immediately adopt an updated scaling factor, and for that purpose, it may update a scaling factor in real time by modifying the equations (11) to (13) with reference to the modification from the equation (9) to equation (10).
In the MMSE STSA method, a scaling factor is successively updated. The noise suppression unit 3 updates the scaling factor $\alpha_n(k)$, for each frequency, by a method similar to that described above using the equations (8) to (13).
Comparing the recalculation method and the successive updating method described above as updating methods of a scaling factor, the former is characterized by a high tracking speed and the latter is by high accuracy. In order to take advantages of these characteristics, the noise suppression unit 3 can change an updating method such that the recalculation method is used first and the successive updating method is used later. In determining a timing to change an updating method, the noise suppression unit 3 may employ a condition if a scaling factor has become sufficiently close to an optimum value for changing the updating method. Alternatively, for example, the noise suppression unit 3 may change an updating method when a predetermined time has elapsed. Furthermore, the noise suppression unit 3 may also change an updating method when a correction amount of a scaling factor has become smaller than a predetermined threshold value.
As has been described above, according to the present exemplary embodiment, since noise information used for noise suppression is updated based on a noise suppression result, a variety of noise including unknown noise can be suppressed.

(eleventh exemplary embodiment)

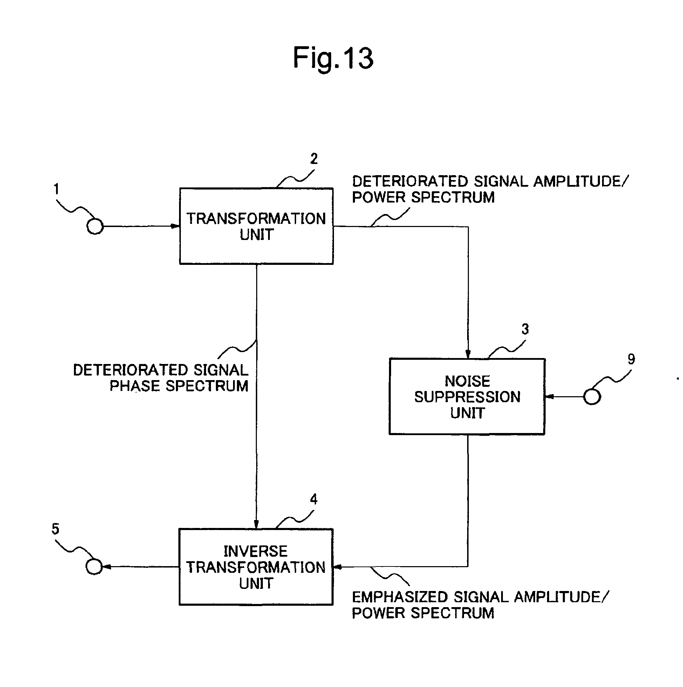

An eleventh exemplary embodiment will be described below using Fig. 13. From an input port 9 to a noise suppression unit 3 included in an information processing device as the eleventh exemplary embodiment, supplied is information (known-noise existence information) indicating whether or not known noise exists in an inputted deteriorated signal. In the examples of Figs. 5 to 8, the known-noise existence information is supplied to the selection section 535 or the mixing section 735, where selection or mixing is performed depending on the known-noise existence information.
By this way, surefire noise suppression can be performed at a timing point when specific noise exists.

(twelfth exemplary embodiment)

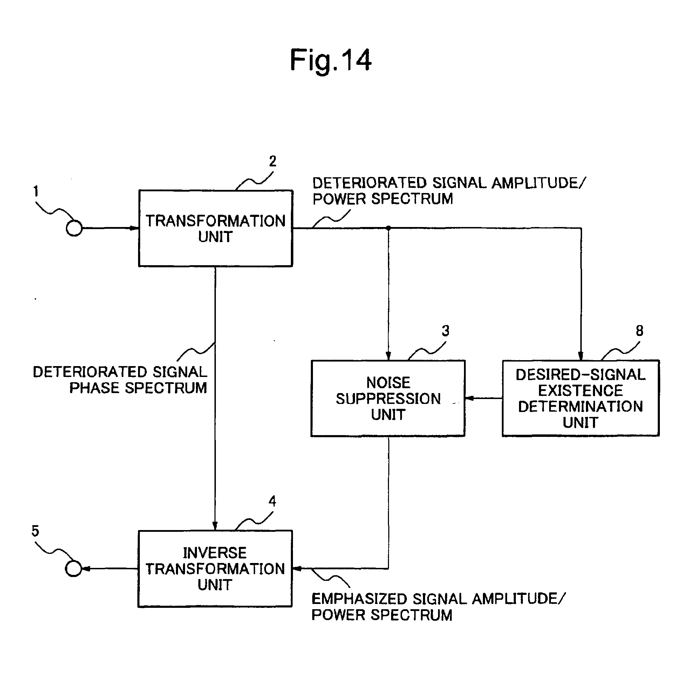

A twelfth exemplary embodiment will be described below using Fig. 14. To a noise suppression unit 3 included in an information processing device as the twelfth exemplary embodiment, supplied is output from a desired-signal existence determination unit 8. A deteriorated-signal amplitude spectrum is transmitted from a transformation unit 2 to the desired-signal existence determination unit 8, where the deteriorated-signal amplitude spectrum is analyzed to determine whether or not a desired signal exists or how much it exists. In the examples of Figs. 5 to 8, output from the desired-signal existence determination unit 8 is supplied to the selection section 535 or the mixing section 735, where selection or mixing is performed depending on the supplied determination result.

According to the present exemplary embodiment, since noise suppression is performed according to the proportion of the noise in the deteriorated signal, much more accurate noise suppression result can be obtained as a result.

(other exemplary embodiments)

Although, in the first to twelfth exemplary embodiments described above, descriptions have been given of information processing devices each having a different characteristic from the others, information processing devices obtained by combining those characteristics may be included within the scope of the present invention, which is defined by the appended claims.

Further, the present invention may be applied to a system composed of a plurality of devises, and also may be applied to a sole device. Furthermore, the present invention can be applied to the case where a signal processing program of software for realizing the functions of the exemplary embodiments is supplied to a system or a device directly or from a remote place. Therefore, a program installed in a computer so as to realize the functions of the present invention, a medium storing the program and a WWW server allowing for downloading the program are included within the scope of the present invention.

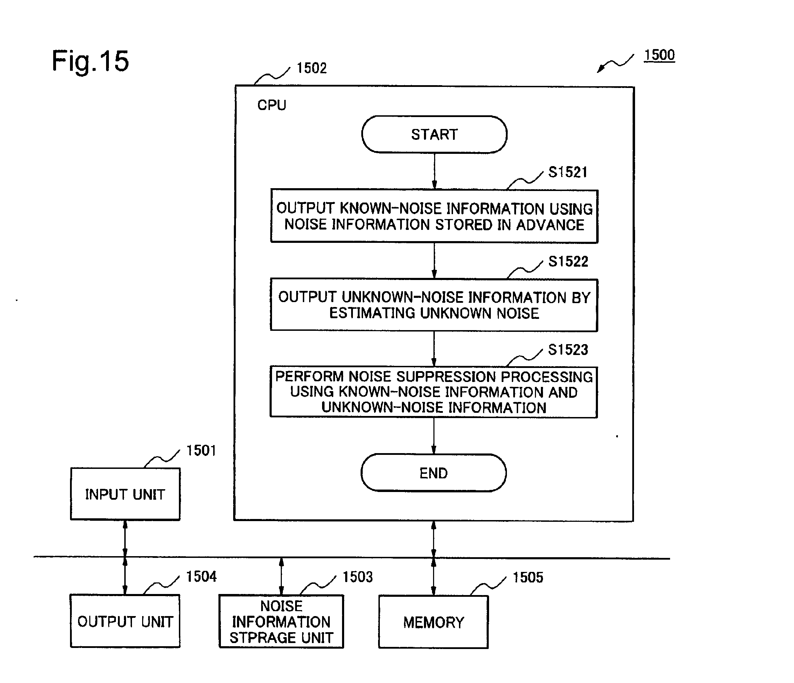

Fig. 15 is a configuration diagram of a computer 1500 which executes the signal processing program in the case of configuring the first exemplary embodiment with a signal processing program. The computer 1500 includes an input unit 1501, a CPU 1502, a noise information storage unit 1503, an output unit 1504 and a memory 1505.

By reading the signal processing program stored in the memory 1505, the CPU 1502 controls the whole operation of the computer 1500. That is, specifically, in order to suppress known noise having known characteristics, the CPU 1502 executing the signal processing program outputs known-noise information using noise information stored in advance (S1521). Next, in order to suppress unknown noise having unknown characteristics, the CPU 1502 estimates unknown noise and outputs unknown-noise information (S1522). Further, using the known-noise information and the unknown-noise information, the CPU 1502 suppresses the noise included in the deteriorated signal inputted at the input unit 1501 (S1523), and outputs an enhanced signal from the output unit 1504. By this way, the same effect as that of the first exemplary embodiment can be obtained.

**[other expressions of exemplary embodiments]**

A part or the whole of the above-described exemplary embodiments can be expressed also as the following further exemplary embodiments.

(further exemplary embodiment 1)

An information processing device comprising a noise suppression means for suppressing noise included in an inputted deteriorated signal, which is characterized by that
said noise suppression means comprises:

a first output means which outputs known-noise information, in order to suppress known noise having known characteristics, using noise information stored in advance; and
a second output means which estimates unknown noise, in order to suppress said unknown noise having unknown characteristics, and outputs unknown-noise information,
and said noise suppression means performs noise suppression using said known-noise information and said unknown-noise information.

(further exemplary embodiment 2)

The information processing device described in further exemplary embodiment 1, which is characterized by that, on a signal having undergone noise suppression using the known-noise information outputted from said first output means, said noise suppression means further performs noise suppression using the unknown-noise information outputted from said second output means.

(further exemplary embodiment 3)

The information processing device described in further exemplary embodiments 1 or 2, which is characterized by that
said second output means estimates said unknown noise, on the basis of said inputted deteriorated signal.

(further exemplary embodiment 4)

The information processing device described in further exemplary embodiments 1, 2 or 3, which is characterized by that
said first output means generates known-noise information from said stored noise information, on the basis of said inputted deteriorated signal.

(further exemplary embodiment 5)

The information processing device described in further exemplary embodiment 1, which is characterized by that said noise suppression means further comprises
a selection means which selects either of said known-noise information outputted from said first output means or said unknown-noise information outputted from said second output means,
and performs noise suppression using noise information selected by said selection means.

(further exemplary embodiment 6)

The information processing device described in further exemplary embodiment 5, which is characterized by that said selection means selects either of said known-noise information or said unknown-noise information, on the basis of said deteriorated signal.

(further exemplary embodiment 7)

The information processing device described in further exemplary embodiment 1, which is characterized by that said noise suppression means
further comprises a mixing means for mixing said known-noise information outputted from said first output means and said unknown-noise information outputted from said second output means, and
performs noise suppression using mixed noise information generated in mixing by said mixing means.

(further exemplary embodiment 8)

The information processing device described in further exemplary embodiment 7, which is characterized by that said mixing means mixes said known-noise information and said unknown-noise information, on the basis of said deteriorated signal.

(further exemplary embodiment 9)

The information processing device described in any one of further exemplary embodiments 1 to 8, which is characterized by that it further comprises:

a transformation means for transforming an inputted voice signal into a spectrum and thus generating said deteriorated signal; and
an inverse transformation means for generating a voice signal to output by performing an inverse transform on a spectrum in which noise was suppressed by said noise suppression means.

(further exemplary embodiment 10)

The information processing device described in any one of further exemplary embodiments 1 to 9, which is characterized by that
said first output means outputs said known-noise information after correcting it according to a suppression result by said noise suppression means.

(further exemplary embodiment 11)

The information processing device described in any one of further exemplary embodiments 1 to 10, which is characterized by that
it further comprises a determination means for determining, in a deteriorated signal, how much a desired signal not to be suppressed exists or if it does not exist, and

said noise suppression means performs noise suppression according to the determination result by said determination means.

(further exemplary embodiment 12)

A signal processing method for suppressing noise included in an inputted deteriorated signal, which comprises:

outputting known-noise information using noise information stored in advance, in order to suppress known noise having known characteristics;
outputting unknown-noise information by estimating unknown noise having unknown characteristics, in order to suppress said unknown noise; and
suppressing noise included in said deteriorated signal using said known-noise information and said unknown-noise information.

(further exemplary embodiment 13)

A signal processing program for suppressing noise included in an inputted deteriorated signal, which is characterized that it makes a computer execute:

a first output step of outputting known-noise information using noise information stored in advance, in order to suppress known noise having known characteristics;
a second output step of outputting unknown noise information by estimating unknown noise having unknown characteristics, in order to suppress said unknown noise; and
a noise suppression step of suppressing noise included in said deteriorated signal using said known-noise information and said unknown-noise information.

Although the present invention has been described above with reference to exemplary embodiments, the present invention is not limited to the above-described exemplary embodiments. In configurations and details of the present invention, various changes which are understood by those skilled in the art may be made within the scope of the present invention, which is defined by the appended claims.

This application insists on priority based on Japanese Patent Application No. 2010-119495 proposed on May 25, 2010.

**Claims**

1. An information processing device comprising a noise suppression means for suppressing noise included in an inputted deteriorated audio signal, wherein:

   said noise suppression means includes:

   a first output means for outputting known-noise information using noise information stored in advance, in order to suppress known noise having known characteristics; and
   a second output means for outputting unknown-noise information by estimating unknown noise having unknown characteristics, in order to suppress said unknown noise,
   wherein said noise suppression means performs noise suppression using said known-noise information and said unknown-noise information, and ,
   wherein on an audio signal having undergone noise suppression using the known-noise information outputted from said first output means, said noise suppression means further performs noise suppression using the unknown-noise information outputted from said second output means.

2. The information processing device according to claim 1,
   wherein said second output means estimates said unknown noise on the basis of said inputted deteriorated audio signal.

3. The information processing device according to claim 1 or 2, wherein
   said first output means generates known-noise information mixing a plurality of pieces of said stored noise information, on the basis of said inputted deteriorated audio signal.

4. The information processing device according to any one of claims 1 to 3, which further comprises:

   a transformation means for transforming an inputted deteriorated audio signal into a spectrum and thus generating said deteriorated audio signal; and
   an inverse transformation means for generating a enhanced audio signal to output, by performing an inverse transform on a spectrum in which noise was suppressed by said noise suppression means.

5. The information processing device according to any one of claims 1 to 4, wherein
   said first output means corrects known-noise information according to a suppression result by said noise suppression means and outputs said corrected known-noise information.

6. The information processing device according to any one of claims 1 to 5, wherein
   the information processing device further comprises a determination means for determining, in a deteriorated audio signal, in how much a desired audio signal not to be suppressed exists or does not exist, and
   said noise suppression means performs noise suppression according to a determination result by said determination means.

7. An audio signal processing method comprising:

   (a) outputting known-noise information using noise information stored in advance, in order to suppress known noise having known characteristics;
   (b) outputting unknown-noise information by estimating unknown noise having unknown characteristics, in order to suppress said unknown noise;
   (c) suppressing noise included in inputted deteriorated audio signal, using said known-noise information and said unknown-noise information, and
   (d) suppressing noise included in an audio signal having undergone noise suppression using the known-noise information outputted in step (a), using the unknown-noise information outputted in step (b).

8. A program recording medium storing an audio signal processing program for making a computer execute the steps of the audio signal processing method of claim 7.


**Patentansprüche**

1. Informationsverarbeitungsvorrichtung mit einer Rauschunterdrückungseinrichtung zum Unterdrücken von in einem zugeführten Audiosignal mit schlechter Signalqualität enthaltenem Rauschen, wobei:

   die Rauschunterdrückungseinrichtung aufweist:

   eine erste Ausgabeeinrichtung zum Ausgeben von Information über bekanntes Rauschen unter Verwendung vorgespeicherter Information, um bekanntes Rauschen mit bekannten Eigenschaften zu unterdrücken; und
   eine zweite Ausgabeeinrichtung zum Ausgeben von Information über unbekanntes Rauschen durch Beurteilen von unbekanntem Rauschen mit unbekannten Eigenschaften, um das unbekannte Rauschen zu unterdrücken,
   wobei die Rauschunterdrückungseinrichtung eine Rauschunterdrückung unter Verwendung der Information über bekanntes Rauschen und der Information über unbekanntes Rauschen ausführt, und
   wobei die Rauschunterdrückungseinrichtung bezüglich eines Audiosignals, das der Rauschunterdrückung unter Verwendung der durch die erste Ausgabeeinrichtung ausgegebenen Information über bekanntes Rauschen unterzogen wurde, ferner eine Rauschunterdrückung unter Verwendung der durch die zweite Ausgabeeinrichtung ausgegebenen Information über unbekanntes Rauschen ausführt.

2. Informationsverarbeitungsvorrichtung nach Anspruch 1,
   wobei die zweite Ausgabeeinrichtung das unbekannte Rauschen basierend auf dem zugeführten Audiosignal mit schlechter Signalqualität beurteilt.

3. Informationsverarbeitungsvorrichtung nach Anspruch 1 oder 2, wobei
   die erste Ausgabeeinrichtung Information über bekanntes Rauschen durch Mischen von Teilen der gespeicherten Rauschinformation auf der Basis des zugeführten Audiosignals mit schlechter Signalqualität erzeugt.

4. Informationsverarbeitungsvorrichtung nach einem der Ansprüche 1 bis 3, ferner mit:

einer Transformationseinrichtung zum Transformieren eines zugeführten Audiosignals mit schlechter Signalqualität in ein Spektrum, um dadurch das Audiosignal mit schlechter Signalqualität zu erzeugen; und
eine inverse Transformationseinrichtung zum Erzeugen eines auszugebenden Audiosignals mit verbesserter Signalqualität durch Ausführen einer inversen Transformation bezüglich eines Spektrums, in dem Rauschen durch die Rauschunterdrückungseinrichtung unterdrückt worden ist.

5. Informationsverarbeitungsvorrichtung nach einem der Ansprüche 1 bis 4, wobei
die erste Ausgabeeinrichtung Information über bekanntes Rauschen gemäß einem Unterdrückungsergebnis der Rauschunterdrückungseinrichtung korrigiert und die korrigierte Information über bekanntes Rauschen ausgibt.

6. Informationsverarbeitungsvorrichtung nach einem der Ansprüche 1 bis 5, wobei
die Informationsverarbeitungsvorrichtung ferner eine Bestimmungseinrichtung aufweist, die dazu geeignet ist, zu bestimmen, inwieweit in einem Audiosignal mit schlechter Signalqualität ein nicht zu unterdrückendes gewünschtes Audiosignal vorhanden ist oder nicht, und
die Rauschunterdrückungseinrichtung eine Rauschunterdrückung gemäß einem Bestimmungsergebnis der Bestimmungseinrichtung ausführt.

7. Audiosignalverarbeitungsverfahren mit den Schritten:

(a) Ausgeben von Information über bekanntes Rauschen unter Verwendung vorgespeicherter Rauschinformation, um bekanntes Rauschen mit bekannten Eigenschaften zu unterdrücken;
(b) Ausgeben von Information über unbekanntes Rauschen durch Beurteilen von unbekanntem Rauschen mit unbekannten Eigenschaften, um das unbekannte Rauschen zu unterdrücken;
(c) Unterdrücken von in einem zugeführten Audiosignal mit schlechter Signalqualität enthaltenem Rauschen unter Verwendung der Information über bekanntes Rauschen und der Information über unbekanntes Rauschen; und
(d) Unterdrücken von Rauschen, das im Audiosignal enthalten ist, bezüglich dem eine Rauschunterdrückung unter Verwendung der in Schritt (a) ausgegebenen Information über bekanntes Rauschen und der in Schritt (b) ausgegebenen Information über unbekanntes Rauschen ausgeführt worden ist.

8. Programmspeichermedium zum Speichern eines
Audiosignalverarbeitungsprogramms, das einen Computer veranlasst, die Schritte des Audiosignalverarbeitungsverfahrens nach Anspruch 7 auszuführen.

**Revendications**

1. Dispositif de traitement d'informations comprenant un moyen de suppression de bruit permettant de supprimer du bruit inclus dans un signal audio détérioré entré, dans lequel :

ledit moyen de suppression de bruit comprend :

un premier moyen de sortie permettant de produire en sortie des informations de bruit connu à l'aide d'informations de bruit stockées à l'avance, afin de supprimer du bruit connu ayant des caractéristiques connues ; et
un second moyen de sortie permettant de produire en sortie des informations de bruit inconnu en estimant le bruit inconnu ayant des caractéristiques inconnues, afin de supprimer ledit bruit inconnu,
dans lequel ledit moyen de suppression de bruit réalise une suppression de bruit à l'aide desdites informations de bruit connu et desdites informations de bruit inconnu, et
dans lequel sur un signal audio ayant subi une suppression de bruit à l'aide des informations de bruit connu produites en sortie par ledit premier moyen de sortie, ledit moyen de suppression de bruit réalise en outre une suppression de bruit à l'aide des informations de bruit inconnu produites en sortie par ledit second moyen de sortie.

**2.** Dispositif de traitement d'informations selon la revendication 1,
dans lequel ledit second moyen de sortie estime ledit bruit inconnu sur la base dudit signal audio détérioré entré.

**3.** Dispositif de traitement d'informations selon la revendication 1 ou 2, dans lequel
ledit premier moyen de sortie génère des informations de bruit connu mélangeant une pluralité d'éléments desdites informations de bruit stockées, sur la base dudit signal audio détérioré entré.

**4.** Dispositif de traitement d'informations selon l'une quelconque des revendications 1 à 3, qui comprend en outre :

un moyen de transformation permettant de transformer un signal audio détérioré entré en un spectre et de générer ainsi ledit signal audio détérioré ; et
un moyen de transformation inverse permettant de générer un signal audio amélioré à produire en sortie, en réalisant une transformée inverse sur un spectre dans lequel le bruit a été supprimé par ledit moyen de suppression de bruit.

**5.** Dispositif de traitement d'informations selon l'une quelconque des revendications 1 à 4, dans lequel
ledit premier moyen de sortie corrige des informations de bruit connu selon un résultat de suppression par ledit moyen de suppression de bruit et produit en sortie lesdites informations de bruit connu corrigées.

**6.** Dispositif de traitement d'informations selon l'une quelconque des revendications 1 à 5, dans lequel
le dispositif de traitement d'informations comprend en outre un moyen de détermination permettant de déterminer, dans un signal audio détérioré, dans quelle mesure un signal audio souhaité qui n'est pas à supprimer existe ou non, et ledit moyen de suppression de bruit réalise une suppression de bruit selon un résultat de détermination par ledit moyen de détermination.

**7.** Procédé de traitement de signal audio comprenant .

(a) la production en sortie d'informations de bruit connu à l'aide d'informations de bruit stockées à l'avance, afin de supprimer un bruit connu ayant des caractéristiques connues ;
(b) la production en sortie d'informations de bruit inconnu en estimant du bruit inconnu ayant des caractéristiques inconnues, afin de supprimer ledit bruit inconnu ;
(c) la suppression de bruit inclus dans ledit signal audio détérioré entré, à l'aide desdites informations de bruit connu et desdites informations de bruit inconnu, et
(d) la suppression de bruit inclus dans un signal audio ayant subi une suppression de bruit à l'aide des informations de bruit connu produites en sortie à l'étape (a), à l'aide des informations de bruit inconnu produites à l'étape (b).

**8.** Support d'enregistrement de programme stockant un programme de traitement de signal audio pour faire exécuter par un ordinateur les étapes du procédé de traitement de signal audio de la revendication 7.

# Fig.1

3

## NOISE SUPPRESSION UNIT

301

### KNOWN-NOISE INFORMATION OUTPUT SECTION

311

STORAGE SECTION

DETERIORATED SIGNAL

EMPHASIZED SIGNAL

303

### UNKNOWN-NOISE INFORMATION OUTPUT SECTION

331

ESTIMATION SECTION

Fig.2

NOISE SUPPRESSION UNIT — 23

DETERIORATED SIGNAL

KNOWN-NOISE INFORMATION OUTPUT SECTION — 231

KNOWN-NOISE SUPPRESSION SECTION — 232

UNKNOWN-NOISE SUPPRESSION SECTION — 234

UNKNOWN-NOISE INFORMATION OUTPUT SECTION — 233

EMPHASIZED SIGNAL

## Fig.3

NOISE SUPPRESSION UNIT — 33

DETERIORATED SIGNAL →

231 KNOWN-NOISE INFORMATION OUTPUT SECTION

232 KNOWN-NOISE SUPPRESSION SECTION

234 UNKNOWN-NOISE SUPPRESSION SECTION

333 UNKNOWN-NOISE INFORMATION OUTPUT SECTION

→ EMPHASIZED SIGNAL

EP 2 579 255 B1

# Fig.4

NOISE SUPPRESSION UNIT 43

DETERIORATED SIGNAL

KNOWN-NOISE INFORMATION OUTPUT SECTION 431

KNOWN-NOISE SUPPRESSION SECTION 232

UNKNOWN-NOISE SUPPRESSION SECTION 234

UNKNOWN-NOISE INFORMATION OUTPUT SECTION 333

EMPHASIZED SIGNAL

EP 2 579 255 B1

# Fig.5

NOISE SUPPRESSION UNIT 53

KNOWN-NOISE INFORMATION OUTPUT SECTION 231

UNKNOWN-NOISE INFORMATION OUTPUT SECTION 333

SELECTION SECTION 535

SUPPRESSION SECTION 536

DETERIORATED SIGNAL

EMPHASIZED SIGNAL

# Fig.6

NOISE SUPPRESSION UNIT 63

KNOWN-NOISE INFORMATION OUTPUT SECTION 431

UNKNOWN-NOISE INFORMATION OUTPUT SECTION 333

SELECTION SECTION 535

SUPPRESSION SECTION 536

DETERIORATED SIGNAL

EMPHASIZED SIGNAL

EP 2 579 255 B1

# Fig.7

NOISE SUPPRESSION UNIT 73

KNOWN-NOISE INFORMATION OUTPUT SECTION 231

UNKNOWN-NOISE INFORMATION OUTPUT SECTION 533

MIXING SECTION 735

SUPPRESSION SECTION 536

DETERIORATED SIGNAL

EMPHASIZED SIGNAL

EP 2 579 255 B1

Fig.8

NOISE SUPPRESSION UNIT 83

KNOWN-NOISE INFORMATION OUTPUT SECTION 431

UNKNOWN-NOISE INFORMATION OUTPUT SECTION 533

MIXING SECTION 735

SUPPRESSION SECTION 536

DETERIORATED SIGNAL

EMPHASIZED SIGNAL

# Fig.9

DETERIORATED SIGNAL AMPLITUDE/
POWER SPECTRUM

TRANSFORMATION
UNIT

DETERIORATED SIGNAL
PHASE SPECTRUM

NOISE
SUPPRESSION
UNIT

INVERSE
TRANSFORMATION
UNIT

EMPHASIZED SIGNAL AMPLITUDE/
POWER SPECTRUM

# Fig.10

FRAME DIVIDING SECTION — 121

WINDOWING PROCESSING SECTION — 122

FOURIER TRANSFORM SECTION — 123

DETERIORATED SIGNAL AMPLITUDE/POWER SPECTRUM

DETERIORATED SIGNAL PHASE SPECTRUM

EP 2 579 255 B1

# Fig.11

EP 2 579 255 B1

DETERIORATED SIGNAL
PHASE SPECTRUM

4

141

142

143

DETERIORATED
SIGNAL AMPLITUDE/
POWER SPECTRUM

| FRAME COMBINING SECTION | WINDOWING PROCESSING SECTION | INVERSE FOURIER TRANSFORM SECTION |

# Fig.12

DETERIORATED SIGNAL AMPLITUDE/
POWER SPECTRUM

TRANSFORMATION
UNIT

DETERIORATED SIGNAL
PHASE SPECTRUM

NOISE
SUPPRESSION
UNIT

INVERSE
TRANSFORMATION
UNIT

EMPHASIZED SIGNAL AMPLITUDE/
POWER SPECTRUM

# Fig.13

DETERIORATED SIGNAL AMPLITUDE/
POWER SPECTRUM

TRANSFORMATION
UNIT

NOISE
SUPPRESSION
UNIT

DETERIORATED SIGNAL
PHASE SPECTRUM

INVERSE
TRANSFORMATION
UNIT

EMPHASIZED SIGNAL AMPLITUDE/
POWER SPECTRUM

# Fig.14

# Fig.15

1502

**CPU**

START

S1521

OUTPUT KNOWN-NOISE INFORMATION USING
NOISE INFORMATION STORED IN ADVANCE

S1522

OUTPUT UNKNOWN-NOISE INFORMATION BY
ESTIMATING UNKNOWN NOISE

S1523

PERFORM NOISE SUPPRESSION PROCESSING
USING KNOWN-NOISE INFORMATION AND
UNKNOWN-NOISE INFORMATION

END

1500

1501

INPUT UNIT

1504

OUTPUT UNIT

1503

NOISE
INFORMATION
STPRAGE UNIT

1505

MEMORY

EP 2 579 255 B1

32

# Fig.16

A

INFORMATION PROCESSING DEVICE

3

NOISE SUPPRESSION UNIT

301

FIRST OUTPUT SECTION

303

SECOND OUTPUT SECTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4282227 B
- JP 8221092 A
- JP 2006279185 A
- JP 2002314637 A
- JP 2008203879 A
- JP 2010119495 A

### Non-patent literature cited in the description

- **M. BEROUTI ; R. SCHWARTZ ; J. MAKHOUL.** Enhancement of speech corrupted by acoustic noise. *Proceedings of ICASSP,* April 1979, 208-211